(19) Europäisches Patentamt
European Patent Office
Office européen des brevets

(11) **EP 2 277 144 B1**

(12) **EUROPEAN PATENT SPECIFICATION**

(45) Date of publication and mention
of the grant of the patent:
**12.10.2011 Bulletin 2011/41**

(51) Int Cl.:
***G06T 7/20*** *(2006.01)*

(21) Application number: **09721322.7**

(22) Date of filing: **17.03.2009**

(86) International application number:
**PCT/EP2009/053158**

(87) International publication number:
**WO 2009/115530 (24.09.2009 Gazette 2009/39)**

(54) **METHOD FOR SEGMENTING VIDEO SEGMENTS**

VERFAHREN ZUR SEGMENTIERUNG VON VIDEOSEGMENTEN

PROCÉDÉ DE SEGMENTATION DE SEGMENTS VIDÉO

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **19.03.2008 EP 08300148**

(43) Date of publication of application:
**26.01.2011 Bulletin 2011/04**

(73) Proprietor: **Thomson Licensing
92130 Issy-les-Moulineaux (FR)**

(72) Inventors:
• **FRADET, Matthieu
F-49340 Nuaille (FR)**
• **ROBERT, Philippe
F-35235 Thorigné-Fouillard (FR)**
• **PEREZ, Patrick
F-35200 Rennes (FR)**

(74) Representative: **Huchet, Anne et al
Technicolor
1-5 rue Jeanne d'Arc
92130 Issy-les-Moulineaux (FR)**

(56) References cited:
• **MATTHIEU FRADET ET AL: "Semi-automatic Motion Segmentation with Motion Layer Mosaics" COMPUTER VISION Â ECCV 2008; [LECTURE NOTES IN COMPUTER SCIENCE], SPRINGER BERLIN HEIDELBERG, BERLIN, HEIDELBERG, vol. 5304, 12 October 2008 (2008-10-12), pages 210-223, XP019109257 ISBN: 978-3-540-88689-1**
• **JIANGJIAN XIAO ET AL: "Layer-based video registration" MACHINE VISION AND APPLICATIONS, SPRINGER-VERLAG, BE, vol. 16, no. 2, 1 February 2005 (2005-02-01), pages 75-84, XP019323888 ISSN: 1432-1769**
• **BUGEAU A ET AL: "TRACK AND CUT: SIMULTANEOUS TRACKING AND SEGMENTATION OF MULTIPLE OBJECTS WITH GRAPH CUTS" VISAPP - INTERNATIONAL CONFERENCE ON COMPUTER VISION THEORY ANDAPPLICATIONS,, [Online] no. 3rd conf, 22 January 2008 (2008-01-22), pages 447-454, XP009103212 Retrieved from the Internet: URL: http://www.irisa.fr/vista/Papers/2008_ visapp_ bugeau.pdf>**
• **KEDAR A PATWARDHAN ET AL: "Video Inpainting Under Constrained Camera Motion" IEEE TRANSACTIONS ON IMAGE PROCESSING, IEEE SERVICE CENTER, PISCATAWAY, NJ, US, vol. 16, no. 2, 1 February 2007 (2007-02-01), pages 545-553, XP011155667 ISSN: 1057-7149**

**Description**

FIELD OF THE INVENTION

The invention concerns a method for segmenting images.

BACKGROUND OF THE INVENTION

The problem of segmenting a video in regions of similar motion has been for a long time a hot topic in computer vision and it is still an open problem today. Motion layer extraction has many applications, such as video compression, mosaicing, video object removal, etc. Moreover the extracted layers can be used for advanced video editing tasks including matting and compositing. The usual assumption is that a scene can be described by a set of layers whose motion in the plane is well described by a parametric model. Motion segmentation consists in estimating the motion parameters of each layer and in extracting the layer supports. There are many different approaches.

One type of motion segmentation methods relies on the partitioning of a dense motion field previously estimated. A K-mean clustering algorithm on the motion estimates can be used. The Minimum Description Length (MDL) encoding principle is proposed to decide automatically the adequate number of models. Some authors propose to combine dense motion estimation and parametric segmentation. Some others extract layers either jointly, or one after another using a direct parametric segmentation with no optical flow computation. More recently, video segmentation problem was formulated into the graph cut framework. A sequential approach described provides a segmentation map for the current image taking into account the previous labeling and matching the current image with the next one only. In such a sequential method, in poorly textured regions or when the different motions are small, motion estimated between consecutive images is not likely to be very different from one region to another, which does not help segmentation process. Some researchers moved naturally to simultaneous batch approaches to increase temporal consistency. The aim is to obtain jointly the segmentation of N images using a 3D graph. Some methods are based on also more distant pairs of images to handle small motion cases when computing motion residuals. It is important to notice that such batch methods require that the motion models have already been estimated for the N considered images before the supports extraction, which implies that a clustering has already been done. Moreover this number N of images processed in the 3D graph can certainly not cover a whole sequence due to complexity issues. These methods also impose matching large numbers of image pairs without exploiting the large amount of implied redundancy. Complementary to the motion segmentation task, some authors use the layer representation and the extracted supports to generate as many layer mosaics as extracted motion layers. For a considered layer, its mosaic corresponds to a still image in which the supports of all the images are accumulated to create a single larger layer.

Publication from JIANGJIAN XIAO et al entitled "Layer-based video registration" published in February 2005 under the reference XP019323888 ISSN:1432-1769 describes a model of video registration based on layers.

Publication from Bugeau A et al entitled "Track and cut: simultaneous tracking and segmentation of multiple objects with graph cuts" published on January 22, 2008, under the reference XP009103212 discloses a method to simultaneously segment and track objects.

Publication from Kedar A Patwardhan et al entitled "Video inpainting Under Constrained Camera motion" published on February 1, 2007 under the reference XP011155667 ISSN: 1057-7149 discloses a method for filling in video sequences in the presence of camera motion.

SUMMARY OF THE INVENTION

In order to solve at least one of the abovementioned problems, the invention proposes a new motion layer extraction method using reference layer mosaics. One motivation is to work with distant images (whose motion in between is more discriminative) while reducing the number of pairs of images to be handled benefiting from the fact that layer mosaics represent the video sequence in a compact way. In this model, not only extracted layer supports for mosaicing are used but also layer mosaics for motion segmentation.

In the proposed approach, instead of linking temporally many images pairs from the sequence, the currently processed original image is linked temporally with two sets of motion layer mosaics only. Thus a new image-to-mosaic data term replaces the usual image-to-image motion data term in the objective classification function.

The proposed invention concerns a method for segmenting video segments comprising the steps of

- determining reference instants, which cut the shots into a plurality of intervals, the images defined at reference instants bordering an interval being called the reference images, and
  sequentially for each defined interval
- determining reference instants, which cut the shots into a plurality of intervals, the images defined at reference instants bordering an interval being called the reference images, and sequentially for each defined interval

- segmenting at least one reference image to obtain a set of layers for at least said reference image,
- initializing one mosaic associated with each of the layers of the reference images,
  sequentially, for each image in each defined interval,
- forward and backward motion estimation between the current image and the reference images to establish a forward and a backward motion model for each layer of the current images,
- energy determination as a sum of a color data term, a temporal constraints term and a spatial smoothness term,
- segmentation of the current image by minimizing the said energy,

According to the invention, the energy further comprises an image-to-mosaic motion data term, said term being based on a motion residual estimated between the current image and the mosaics associated with the reference images.

According to a preferred embodiment, the two reference images bordering an interval are segmented in order to obtain a set of layers for the said two reference images.

Preferentially, said mosaic of a given layer initially results from the accumulation of the layer data from the previously segmented reference images.

According to an alternative said mosaic of a given layer initially results from the segmentation of one previously segmented reference image.

Preferentially, the method further comprises a step of projection of the segmented layers of the current image to the corresponding reference mosaics to update the reference mosaics.

Preferentially, the energy minimization uses the graph cuts framework.

Preferentially, when all images in the interval have been segmented, it comprises a further step of user interaction to refine at least one of the obtained mosaics.

Preferentially, further to the user interaction, the following steps are repeated sequentially for each image in each defined interval with the updated mosaics,

- forward and backward motion estimation between the current image and the reference images to establish a forward and a backward motion model for each layer of the current images,
- energy determination as a function of color attributes, temporal constraints, spatial smoothness, an image-to-mosaic data term
- segmentation of the current image by minimizing the energy.

In another embodiment, a user interaction modifies at least one mosaic manually during the sequential steps.

BRIF DESCRIPTION OF THE DRAWINGS

Other characteristics and advantages of the invention will appear through the description of a non-limiting embodiment of the invention, which will be illustrated, with the help of the enclosed drawing:

- Figure 1 represents a first embodiment of the invention using two reference images,
- Figure 2 represents an example of mosaics matching between the current image to be segmented and the mosaics associated with the corresponding reference images, in reference to the first embodiment of the invention.
- Figure 3 represents a second embodiment of the invention where a single reference image is used,
- Figure 4 represents an example of mosaics matching between the current image to be segmented and the mosaics associated with the corresponding reference image, in reference to the second embodiment of the invention in the case of a backward motion estimation.
- Figure 5 represents a second example of mosaics matching between the current image to be segmented and the mosaics associated with the corresponding reference image, in reference to the second embodiment of the invention in the case of a forward motion estimation.

DETAILED DESCRIPTION OF PREFERED EMBODIMENTS

The invention proposes an iterative technique to estimate the motion parameters, to extract the support of each layer, and to create layer mosaics as the segmentation progresses. At the end of the segmentation, like with every segmentation method, it can happen that the obtained boundaries are not precisely the expected ones. Often, the users have no other possibility than interacting on every images one after another to correct the unsatisfactory result. The present embodiment proposes an original way for the users to easily provide additional input on the mosaics. This input is then propagated to the whole video interval thanks to a second segmentation pass.

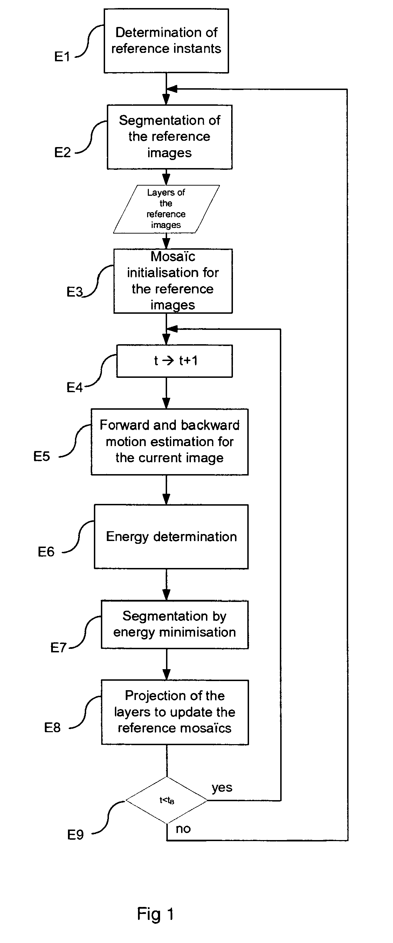

Reference is made now to figure 1.

In a first step (E1) of the segmentation method, the users selects reference instants to divide the shot into several intervals. The images at these reference instants are called reference images. In the following description, a interval starts at instant $t_A$ and ends at instant $t_B$.

The selection of the intervals can be a cut of the shot into constant time intervals. It can also be based on other criteria such as first or last instants at which a foreground object is fully visible, instant at which a part of a layer appears behind a closer layer after long occlusion. If the selection consists in cutting the shot in constant time intervals, the cut can be done automatically without the help of the user.

In a second step (E2), the user performs a segmentation of these reference images to obtain a set of layers. On reference images, the segmentations are obtained semi-automatically by the users.

According to the assumption usually made in motion segmentation, the scene can be approximated by a set of rigid layers whose motion in the image plane is well described by a parametric model. Additionally, in the present invention, it is assumed that the number of layers is known and that the layers keep the same depth order during the whole shot. The output of step E2 results in a set of reference layers. The document from C. Rother, V. Kolmogorov and A. Blake entitled "GrabCut - Interactive Foreground Extraction Using Iterated Graph Cuts" disclosed in SIGGRAPH in 2004 discloses such a method for bi-layer segmentation.

In a step E3, the mosaics associated with the reference instants are initialized.

The proposed motion segmentation system requires as many mosaics as there are layers in the scene for each reference instants.

Mosaics can be reused in region filling or video editing systems, or also for compression applications.

In a first approach, the mosaic of a given layer initially results from the accumulation of the layer data from the previously segmented reference images.

It is inspired by the semi automatic stitching tools commonly used to generate panoramas from several photographs. Such tools usually detect feature points in each photograph of the set. Then for each pair of images with a common overlapping area, the features belonging to this area are matched to compute the global transformation between the two photographs. In the present embodiment, the set of photographs is replaced by two distant reference images from the original sequence. The users are guided by their knowledge of the sequence to choose adequately the two reference images such that they will provide together the whole layer support. While one assumes that there is only one layer in the common cases of panorama, in the present embodiment there are several layers. The users segment both distant reference images and indicate layers correspondences. Matching between features must take into account both segmentation maps. Then one transformation per layer is estimated. Instead of automatic features matching, the users can manually select the pairs of feature points. This approach is particularly well adapted for the background if the areas occluded by foreground objects in the first reference image are totally disoccluded in the second reference image.

In other approaches, the mosaic of a given layer initially results from the segmentation of one previously segmented reference image. It concerns the simplest case: the one of a foreground object fully visible in the image associated with the chosen reference instant. The interest of such a situation can serve as a guide in the manual choice of reference instants. For such a foreground object the mosaic is made up of the region corresponding to the complete object. The whole remaining area of the mosaic is empty. Since the considered object is fully visible at the reference instant, the mosaic does not need to be further completed. Thus, in this case, step E8 (explained later) is not executed because unneeded. The object boundaries can be obtained by an interactive tool for still image segmentation.

In the following steps, the next images have to be segmented, sequentially between the two reference instants $t_A$ and $t_B$. A simplified flow chart of the sequential system after initialization is shown in Figure 1, from steps E4 to E9.

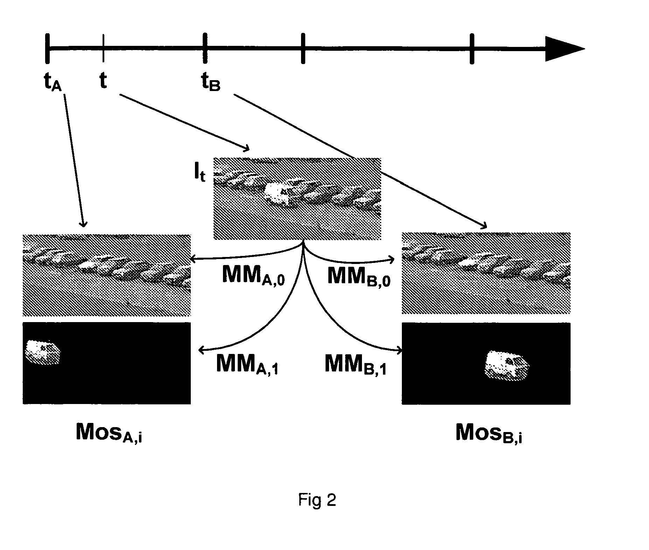

The aim is to progress from $t_A$ to $t_B$ , $t_A$ to $t_B$ being defined as two reference instants defining an interval, as shown on figure 2, while obtaining a succession of temporally consistent segmentations. The independant segmentation maps obtained by the users at $t_A$ and $t_B$ may be seen as boundary conditions that are propagated in the interval. At current time t (step E4), the segmentation of the image $I_t$ is first predicted by projection of the previous segmentation, using affine motion models estimated from a dense motion field computed between $I_{t-1}$ and $I_t$. The layers are projected one after another from the most distant to the closest.

A dense backward motion field between $I_t$ and $I_{tA}$ (image at instant $t_A$) and a dense forward motion field between $I_t$ and $I_{tB}$ (image at instant $t_B$) are estimated at step E5. A reliability index, $reliab_x(\mathbf{p})$, based on the Displaced Frame Difference (DFD) is computed for every motion vector of both fields based on the following equation (1):

$$\forall X \in \{A, B\} \quad reliab_X(\mathbf{p}) = \max\left( 0, 1 - \frac{\left\| I_t(\mathbf{p}) - I_{t_x}(\mathbf{p} - \mathbf{dp}_x) \right\|}{\tau_1} \right) \quad \text{equation (1)}$$

where $dp_A$ is the backward motion vector estimated at pixel p, $dp_B$ the forward one, and $\tau_1$, is an empirical normalization threshold, depending on the photometric properties of the image sequence (contrast, texture...). As for parametric motion modeling, the affine model with 6 degrees of freedom is adopted according to the following equation (2):

$$MM(x,y) = \begin{pmatrix} a_{x0} + a_{xx} \times x + a_{xy} \times y \\ a_{y0} + a_{yx} \times x + a_{yy} \times y \end{pmatrix} \qquad \text{equation (2)}$$

In other embodiments, one can use other parametric models than affine ones

Based on the dense motion fields, forward and backward affine motion models are estimated for each layer L of the predicted map. The motion parameters are recovered by a standard linear regression technique but the reliability measure is used to weight the influence of each vector on the estimate. For the motion models, we use the following notations: $MM_{A,L}$ is the backward affine motion model estimated between $I_t$ and $I_{tA}$ on layer L and $MM_{B,L}$ is the forward affine motion model estimated between It and $I_{tB}$ on layer L. According to the assumption of brightness constancy, for a pixel p of image $I_t$ that belongs to the layer L and on condition it is not occluded in $I_{tA}$ and $I_{tB}$, the following equation (3) is applied.

$$\forall X \in \{A, B\} \quad I_t(\mathbf{p}) = I_{t_x}\left(\mathbf{p} - MM_{X,L}(\mathbf{p})\right) \qquad \text{equation (3)}$$

In a step E6, the following objective function is determined, which is the sum of two standard terms, color data term and spatial smoothness, plus two terms: a mosaic-based term and a temporal term. This is represented by the following equation (4):

equation (4)

$$E(f) = \underbrace{\sum_{\mathbf{p} \in P} C_\mathbf{p}(f_\mathbf{p})}_{E_{color}(f)} + \lambda_1 \underbrace{\sum_{(\mathbf{p},\mathbf{q}) \in C} V_{\mathbf{p},\mathbf{q}}(f_\mathbf{p}, f_\mathbf{q})}_{E_{smooth}(f)} + \lambda_2 \underbrace{\sum_{\mathbf{p} \in P} M_\mathbf{p}(f_\mathbf{p})}_{E_{mosaic}(f)} + \lambda_3 \underbrace{\sum_{\mathbf{p} \in P} \psi(\mathbf{p})}_{E_{temp}(f)}$$

where $P$ is the pixel set to be segmented in one image, $C$ is the set of neighbor pairs of pixel p, with respect to 8-connectivity, and $\lambda_1$, $\lambda_2$ and $\lambda_3$ are positive parameters which weight the influence of each term. $f_\mathbf{p}$ represents the layer of pixel p.

For instance, $\lambda_1$ is 11, $\lambda_2$ is 17and $\lambda_3$ is 30 or in another embodiment $\lambda_1$ is 30, $\lambda_2$ is 14and $\lambda_3$ is 10.

$f = f(p)_{p \in P}$ with $f_p \in [1,n]$ and n the number of layers.

- Color term

$C_p(f_p)$ is a standard color data penalty term at pixel p, set as negative log-likelihood of color distribution of the layer fp. This distribution consists of the Gaussian Mixture Model computed on the mosaics $Mos_{A,fp}$ and $Mos_{B,fp}$ in their initial state. The document from C. Rother, V. Kolmogorov and A. Blake entitled "GrabCut - Interactive Foreground Extraction Using Iterated Graph Cuts" disclosed in SIGGRAPH in 2004 discloses such a method.

- standard contrast sensitive regularization term or spatial smoothness:

$V_{p,q}(f_p,f_q)$ is a standard contrast-sensitive regularization term defined by the following equation (5):

$$V_{\mathbf{p},\mathbf{q}}(f_\mathbf{p}, f_\mathbf{q}) = \frac{1}{\|\mathbf{p} - \mathbf{q}\|} \exp\left(-\frac{\|I_t(\mathbf{p}) - I_t(\mathbf{q})\|^2}{2\sigma^2}\right) \times T(f_\mathbf{p} \neq f_\mathbf{q}) \qquad \text{equation (5)}$$

where $\sigma^2$ is the standard deviation of the norm of the gradient over the neighborhood and T(.) is 1 if the argument predicate is true and 0 otherwise.

- image- to- mosaic motion data term:

The following equations (6) and (7) respectively illustrate this term:

$$M_{\mathbf{p}}(f_{\mathbf{p}}) = \min_{X \in \{A,B\}} (resMos(X, f_{\mathbf{p}}))$$
  equation (6)

Equation (7)

$$resMos(X, f_{\mathbf{p}}) = \begin{cases} \arctan\left(\left\| I_t(\mathbf{p}) - Mos_{X, f_{\mathbf{p}}}(\mathbf{p'}_X) \right\|^2 - \tau_2\right) + \pi/2 & \text{if } \mathbf{p'}_X \text{ belongs to the mosaic support} \\ + \alpha & \text{otherwise} \end{cases}$$

$M_p(f_p)$ is a image-to-mosaic penalty term at pixel p for the motion models corresponding to layer $f_p$. It corresponds to a residual computed between the original image and each one of the mosaics. $p'_A$ and $p'_B$ are the positions associated in $Mos_{A,fp}$ and in $Mos_{B,fp}$ with p in $I_t$ according to $MM_{A,fp}$ and $MM_{B,fp}$. This smooth penalty and its threshold parameter $\tau_2$ allow a soft distinction between low residuals (well classified pixels) and high residuals (wrongly classified pixels or occluded pixels).

- temporal term:

The following equation (8) illustrates the energy associated with the temporal term:

$$\psi(\mathbf{p}) = \begin{cases} 1 & \text{if } f_{\mathbf{p}} \neq f'_{\mathbf{p}} \text{ and } f'_{\mathbf{p}} \neq \varnothing \\ 0 & \text{otherwise} \end{cases}$$
  equation (8)

where $f'_p$ is the predicted label of pixel p at instant t, and $\varnothing$ represents the areas without any predicted label, i.e. areas which are occluded in $I_{t-1}$ and visible in $I_t$. This temporal term enforces temporally consistency of labeling between consecutive images.

In a step E7, the global energy, represented by equation 4, is minimized using graph-cuts. In other embodiments, the ICM (integrated conditional mode) method can be used, other techniques can also be used.

Predicted motion boundaries are finally refined using the graph cut framework. As an arbitrary number of layers can be handled, the $\alpha$-expansion algorithm is used to solve the multi-labels problem. All the layer supports for the considered instant are obtained simultaneously, which means layer subtraction is not used. Moreover the algorithm provides dense segmentation maps without any additional label for noise, occluded pixels or indetermination.

Given that we work at the pixel scale, building a graph on the whole image then solving it, is computationally expensive.

Moreover, as the method assumes to get a temporal consistency among the segmentation maps, it is not useful to question all of the pixels at every instant. The graph is built on an uncertainty strip around the predicted motion boundaries and on appearing areas only. Notice that appearing areas have no predicted label, so they are also considered as uncertain. Pixels ignored by the graph keep their predicted label that is considered correct. Such a graph restriction constraints the segmentations both spatially and temporally. Pixels that belong to the outlines of the graph area keep their predicted label and constitute boundary conditions for the segmentation to be obtained.

These labeled pixels are considered as seeds and provide hard constraints which are satisfied setting to specific values the weights of the links which connect them to the terminals.

In a step E8, the reference mosaics are updated. This step is optional in the proposed method.

In the preferred embodiment, no user interaction is required to build the mosaics.

At this step the layers obtained for $I_t$ are warped into the reference mosaics using either the forward models or the backward models depending on the mosaic of destination. The stitching of the supports of $I_t$ into the reference mosaics is described later.

The mosaicing is embedded in the time-sequential segmentation system. For each layer, the supports are stitched automatically together as and when they are extracted.

Motion layer extraction consists in extracting the layer supports but also in estimating the motion model parameters of each layer. Thus, once the supports are extracted from the current processed image, the motion models allow to warp these layers into the reference mosaics to build. That means that these latter evolve as the segmentation process progresses. Regions that appear for the first time are copied into the mosaics. For the regions already seen, the values of the first apparition are kept without any refreshment (for instance temporal median filtering).

Given the notations given above:

- either the pixel p of layer L in $I_t$ has already been disoccluded in the images previously segmented, in which case the information is already available in the reference mosaics generated for layer L: $Mos_{A,L}$ and $Mos_{B,L}$.
- or the pixel p of layer L in $I_t$ occurs for the first time, in which case the information is missing in the reference mosaics, so it is copied. The following equation (9) illustrates this:

$$\forall X \in \{A, B\} \quad \mathrm{Mos}_{X,L}\big(\mathbf{p} - MM_{X,L}(\mathbf{p})\big) = I_t(\mathbf{p}) \qquad \text{equation (9)}$$

In case of segmentation mistakes, the mosaic is directly affected. In other words, misclassified areas may be stitched into the wrong mosaic. Voluntarily, such errors during mosaic generation are not concealed. It allows the users to efficiently remove them at the end of the first segmentation pass. A second segmentation pass with such corrected mosaics as input can improve notably the accuracy of the motion boundaries. A user interaction can be performed when all images in said interval have been segmented. The method comprises a further step of user interaction to refine at least one of the obtained mosaics.

Further to the user interaction, the following steps are repeated sequentially for each image in each defined interval with the updated mosaics,

- forward and backward motion estimation between the current image and the reference images to establish and a backward motion model for each layer of the current image,
- energy determination as a function of color attributes, temporal constraints, spatial smoothness, an image-to-motion data term
- segmentation of the current image by minimizing the said energy.

Preferentially, a user interaction modifies at least one mosaic manually during said sequential steps.

After step E8, a test is performed to determine if the end of the interval is reached, that is to say, if all the images in the interval $[t_A, t_B[$ .have been segmented. If it is the case, the method goes to step E2, otherwise step E4 is performed and next image will be segmented.

The steps E5 to E9 are repeated for all the images in the interval $]t_A, t_B[$. When t reaches $t_B$, a new reference interval is determined and the steps E2 to E4 are repeated for the new reference image determining the end of the new interval.

In other embodiments, the steps E2 to E3 can be performed for all the reference images of all the intervals before segmenting the intermediate images. This means that steps E2 to E3 are repeated for all the reference images. We thus obtain a set of reference mosaics for all these images; After that, the steps E4 to E9 are repeated for all the images of each interval, using the reference mosaics of the concerned interval.

Figure 2 illustrates the matching between the current layer to be segmented and the mosaics in the embodiment where two reference images are used.

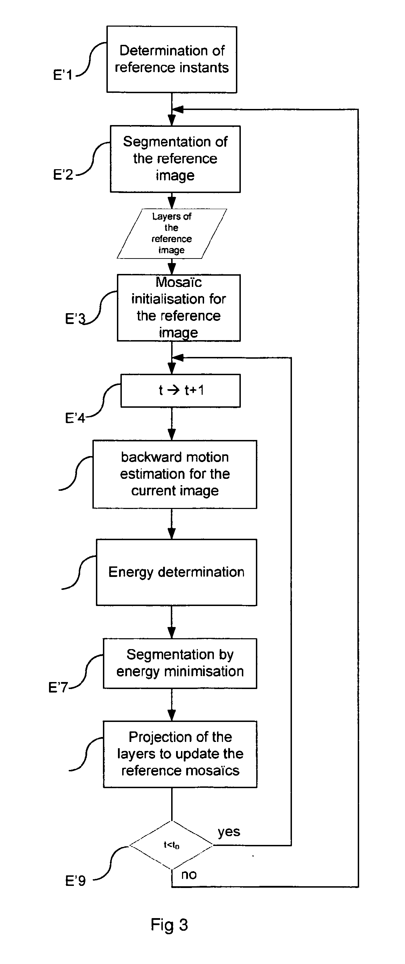

Figure 3 represents another embodiment of the invention in which only one reference image is used.

In a first step E'1 of the segmentation method, the users selects reference instants to divide the shot into several intervals. The images at these reference instants are called reference images. In the following description, an interval starts at instant $t_A$ and ends at instant $t_B$.

The selection of the intervals can be a cut of the shot into constant time intervals. It can also be based on other criteria such as first or last instants at which a foreground object is fully visible, instant at which a part of a layer appears behind a closer layer after long occlusion. If the selection consists in cutting the shot in constant time intervals, the cut can be done automatically without the help of the user.

In a second step E'2, the user performs a segmentation of one of these reference images to obtain a set of layers. In the present embodiment, the user performs the segmentation of image at instant $t_A$. In another embodiment, it is easy to understand that the image at instant $t_B$ can be segmented.

On the reference image, the segmentations are obtained semi-automatically by the users.

According to the assumption usually made in motion segmentation, the scene can be approximated by a set of rigid layers whose motion in the image plane is well described by a parametric model. Additionally, in the present invention, it is assumed that the number of layers n is known and that the layers keep the same depth order during the whole shot. The output of step E2 results in a set of reference layers. The document from C. Rother, V. Kolmogorov and A. Blake entitled "GrabCut - Interactive Foreground Extraction Using Iterated Graph Cuts" disclosed in SIGGRAPH in 2004 discloses such a method for bi-layer segmentation.

In a step E'3, the mosaics associated with the reference instant $t_A$ are initialized.

The proposed motion segmentation system requires as many mosaics as there are layers in the scene at reference instant $t_A$.

Mosaics can be reused in region filling or video editing systems, or also for compression applications.

In a first approach, the mosaic of a given layer initially results from the accumulation of the layer data from the previously segmented reference image.

In other approaches, the mosaic of a given layer initially results from the segmentation of one previously segmented reference image. It concerns the simplest case: the one of a foreground object fully visible in the image associated with the chosen reference instant. The interest of such a situation can serve as a guide in the manual choice of reference instants. For such a foreground object, the mosaic is made up of the region corresponding to the complete object. The whole remaining area of the mosaic is empty. Since the considered object is fully visible at the reference instant, the mosaic does not need to be further completed. Thus, in this case, step E'8 (explained later) is not executed because unneeded. The object boundaries can be obtained by an interactive tool for still image segmentation.

In the following steps, the next images have to be segmented, sequentially between the two instants $t_A$ and $t_B$. A simplified flow chart of the sequential system after initialization is shown in Figure 3, from steps E'4 to E'9.

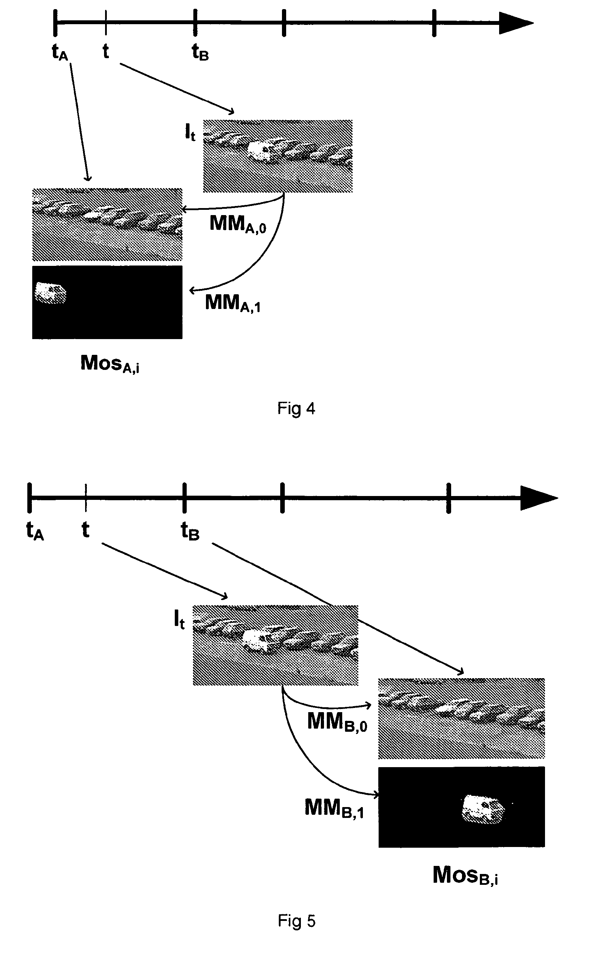

The aim is to progress from $t_A$ to $t_B$, $t_A$ to $t_B$ being defined as two reference instants defining an interval, as shown on figure 4 or 5, while obtaining a succession of temporally consistent segmentations. At current time t (step E'4), the segmentation of the image $I_t$ is first predicted by projection of the previous segmentation using affine motion models estimated from a dense motion field computed between $I_{t-1}$ and $I_t$ . The layers are projected one after another from the most distant to the closest.

A dense backward motion field between $I_t$ and $I_{tA}$ (image at instant $t_A$) is estimated at step E'5 for layer L. A reliability index, $reliab_A(\mathbf{p})$, based on the Displaced Frame Difference (DFD) is computed for every motion vector of the dense motion field based on the following equation (1'):

The prediction of the segmentation map at next time t+1 is done by projection of the segmentation map of $I_t$ using affine motion models estimated from a dense motion field computed between $I_t$ and $I_{t+1}$. This is continued for all the images of the interval $[t_A, t_B]$.

$$reliab_A(\mathbf{p}) = \max\left(0,1 - \frac{\left\| I_t(\mathbf{p}) - I_{t_x}(\mathbf{p} - \mathbf{dp}_A) \right\|}{\tau_1}\right) \quad \text{equation (1')}$$

where $dp_A$ is the backward motion vector estimated at pixel p, and $\tau_1$ is an empirical normalization threshold, depending on the photometric properties of the image sequence (contrast, texture...). As for parametric motion modeling, the affine model with 6 degrees of freedom is adopted according to the following equation (2'):

$$MM(x,y) = \begin{pmatrix} a_{x0} + a_{xx} \times x + a_{xy} \times y \\ a_{y0} + a_{yx} \times x + a_{yy} \times y \end{pmatrix} \quad \text{equation (2')}$$

In other embodiments, one can use other parametric models than affine ones

Based on the dense motion field, backward affine motion models are estimated for each layer of the predicted map. The motion parameters are recovered by a standard linear regression technique but the reliability measure is used to weight the influence of each vector on the estimate. For the motion models, we use the following notations: $MM_{A,L}$ is the backward affine motion model estimated between It and $I_{tA}$ on layer L. According to the assumption of brightness constancy, for a pixel p of image $I_t$ that belongs to the layer L and on condition it is not occluded in $I_{tA}$, the following equation (3') is applied.

$$I_t(\mathbf{p}) = I_{t_A}\big(\mathbf{p} - MM_{A,t}(\mathbf{p})\big) \qquad \text{equation (3')}$$

In a step E'6, the following objective function is determined, which is the sum of two standard terms, color data term and spatial smoothness, plus two terms: a mosaic-based term and a temporal term. This is represented by the following equation (4'):

equation (4')

$$E(f) = \underbrace{\sum_{\mathbf{p} \in P} C_{\mathbf{p}}(f_{\mathbf{p}})}_{E_{color}(f)} + \lambda_1 \underbrace{\sum_{(\mathbf{p},\mathbf{q}) \in C} V_{\mathbf{p},\mathbf{q}}(f_{\mathbf{p}}, f_{\mathbf{q}})}_{E_{smooth}(f)} + \lambda_2 \underbrace{\sum_{\mathbf{p} \in P} M_{\mathbf{p}}(f_{\mathbf{p}})}_{E_{mosaic}(f)} + \lambda_3 \underbrace{\sum_{\mathbf{p} \in P} \psi(\mathbf{p})}_{E_{temp}(f)}$$

where $P$ is the pixel set to be segmented in one image, $C$ is the set of neighbor pairs of pixel p, with respect to 8-connectivity, and $\lambda_1$, $\lambda_2$ and $\lambda_3$ are positive parameters which weight the influence of each term. $f_p$ represents the layer of pixel p.

For instance, $\lambda_1$ is 11, $\lambda_2$ is 17and $\lambda_3$ is 30 or in another embodiment $\lambda_1$ is 30, $\lambda_2$ is 14and $\lambda_3$ is 10.

$f = f(p)_{p \in P}$ with $f_p \in [0, n\text{-}1]$ and n the number of layers.

- Color term

Cp(fp) is a standard color data penalty term at pixel p, set as negative log-likelihood of color distribution of the layer $f_p$. This distribution consists of the Gaussian Mixture Model computed on the mosaics $Mos_{A,fp}$ in their initial state. The document from C. Rother, V. Kolmogorov and A. Blake entitled "GrabCut - Interactive Foreground Extraction Using Iterated Graph Cuts" disclosed in SIGGRAPH in 2004 discloses such a method.

- standard contrast sensitive regularization term or spatial smoothness:

$V_{p,q}(f_p,f_q)$ is a standard contrast-sensitive regularization term defined by the following equation (5'):

$$V_{\mathbf{p},\mathbf{q}}(f_{\mathbf{p}}, f_{\mathbf{q}}) = \frac{1}{\|\mathbf{p} - \mathbf{q}\|} \exp\left(-\frac{\|I_t(\mathbf{p}) - I_t(\mathbf{q})\|^2}{2\sigma^2}\right) \times T(f_{\mathbf{p}} \neq f_{\mathbf{q}}) \qquad \text{equation (5')}$$

where $\sigma^2$ is the standard deviation of the norm of the gradient over the neighborhood and T(.) is 1 if the argument predicate is true and 0 otherwise.

- image- to- mosaic motion data term:

The following equations (6') and (7') respectively illustrate this term:

$$M_{\mathbf{p}}(f_{\mathbf{p}}) = resMos(A, f_{\mathbf{p}}) \qquad \text{equation (6')}$$

## Equation (7')

$$resMos\left(A, f_{\mathbf{p}}\right) = \begin{cases} \arctan\left(\left\|I_t(\mathbf{p}) - Mos_{A,f_p}(\mathbf{p'}_A)\right\|^2 - \tau_2\right) + \pi/2 \text{ if } \mathbf{p'}_X \text{ belongs to the mosaic support} \\ \qquad\qquad + \alpha \text{ otherwise} \end{cases}$$

$M_p(f_p)$ is a image-to-mosaic penalty term at pixel p for the motion models corresponding to layer $f_p$. It corresponds to a residual computed between the original image and each one of the mosaics. $p'_A$ is the position associated in $Mos_{A,fp}$ with p in $I_t$ according to $MM_{A,fp}$. This smooth penalty and its threshold parameter $\tau_2$ allow a soft distinction between low residuals (well classified pixels) and high residuals (wrongly classified pixels or occluded pixels).

- temporal term:

The following equation (8') illustrates the energy associated with the temporal term:

$$\psi(\mathbf{p}) = \begin{cases} 1 & \text{if } f_{\mathbf{p}} \neq f'_{\mathbf{p}} \text{ and } f'_{\mathbf{p}} \neq \varnothing \\ 0 & \text{otherwise} \end{cases} \qquad \text{equation (8')}$$

where $f'_p$ is the predicted label of pixel p at instant t, and $\varnothing$ represents the areas without any predicted label, i.e. areas which are occluded in $I_{t-1}$ and visible in $I_t$. This temporal term enforces temporally consistency of labeling between consecutive images.

In a step E'7, the global energy, represented by equation 4, is minimized using graph-cuts. In other embodiments, the ICM (integrated conditional mode) method can be used, other techniques can also be used.

Predicted motion boundaries are finally refined using the graph cut framework. As an arbitrary number of layers can be handled, the $\alpha$-expansion algorithm is used to solve the multi-labels problem. All the layer supports for the considered instant are obtained simultaneously, which means layer subtraction is not used. Moreover the algorithm provides dense segmentation maps without any additional label for noise, occluded pixels or indetermination.

Given that we work at the pixel scale, building a graph on the whole image then solving it, is computationally expensive.

Moreover, as the method assumes to get a temporal consistency among the segmentation maps, it is not useful to question all of the pixels at every instant. The graph is built on an uncertainty strip around the predicted motion boundaries and on appearing areas only. Notice that appearing areas have no predicted label, so they are also considered as uncertain. Pixels ignored by the graph keep their predicted label that is considered correct. Such a graph restriction constraints the segmentations both spatially and temporally. Pixels that belong to the outlines of the graph area keep their predicted label and constitute boundary conditions for the segmentation to be obtained.

These labeled pixels are considered as seeds and provide hard constraints which are satisfied setting to specific values the weights of the links which connect them to the terminals.

In a step E'8, the reference mosaics are updated. This step is optional in the proposed method.

In the preferred embodiment, no user interaction is required to build the mosaics.

At this step the layers obtained for $I_t$ are warped into the reference mosaics using the backward model. The stitching of the supports of $I_t$ into the reference mosaics is described later.

The mosaicing is embedded in the time-sequential segmentation system. For each layer, the supports are stitched automatically together as and when they are extracted.

Motion layer extraction consists in extracting the layer supports but also in estimating the motion model parameters of each layer. Thus, once the supports are extracted from the current processed image, the motion models allow to warp these layers into the reference mosaics to build. That means that these latter evolve as the segmentation process progresses. Regions that appear for the first time are copied into the mosaics. For the regions already seen, the values of the first apparition are kept without any refreshment (for instance temporal median filtering).

Given the notations given above:

- either the pixel p of layer L in $I_t$ has already been disoccluded in the images previously segmented, in which case the information is already available in the reference mosaics generated for layer L: $Mos_{A,L}$.
- or the pixel p of layer L in $I_t$ occurs for the first time, in which case the information is missing in the reference mosaics, so it is copied. The following equation (9') illustrates this:

$$\text{Mos}_{A,L}\left(\mathbf{p} - MM_{A,L}(\mathbf{p})\right) = I_t(\mathbf{p}) \qquad \text{equation (9')}$$

In case of segmentation mistakes, the mosaic is directly affected. In other words, misclassified areas may be stitched into the wrong mosaic. Voluntarily, such errors during mosaic generation are not concealed. It allows the users to efficiently remove them at the end of the first segmentation pass. A second segmentation pass with such corrected mosaics as input can improve notably the accuracy of the motion boundaries. A user interaction can be performed when all images in said interval have been segmented. The method comprises a further step of user interaction to refine at least one of the obtained mosaics.

Further to the user interaction, the following steps are repeated sequentially for each image in each defined interval with the updated mosaics,

- backward motion estimation between the current image and the reference image to establish a backward motion model for each layer of the current image,
- energy determination as a function of color attributes, temporal constraints, spatial smoothness, an image-to-mosaic data term
- segmentation of the current image by minimizing the said energy.

Preferentially, a user interaction modifies at least one mosaic manually during said sequential steps.

After step E'8, a test is performed to determine if the end of the interval is reached, that is to say, if all the images in the interval $[t_A,t_B[$.have been segmented. If it is the case, the method goes to step E2, otherwise step E4 is performed and next image will be segmented.

The steps E'5 to E'9 are repeated for all the images in the interval $]t_A,t_B[$. When t reaches $t_B$, a new reference interval is determined and the steps E'2 to E'4 are repeated for the new reference image determining the end of the new interval.

In other embodiments, the steps E'2 to E'3 can be performed for all the reference images of all the intervals before segmenting the intermediate images. This means that steps E'2 to E'3 are repeated for all the reference images. We thus obtain a set of reference mosaics for all these images; After that, the steps E'4 to E'9 are repeated for all the images of each interval, using the reference mosaics of the concerned interval.

Figure 4 represents the matching between the current image to be segmented and the mosaics in the embodiment where a single reference image is used, in the case of a backward motion estimation.

Figure 5 represents the matching between the current layer to be segmented and the mosaics in the embodiment where a single reference image is used, in the case of a forward motion estimation.

## Claims

1.  Method for segmenting video segments comprising the steps of

    - determining reference instants, which cut the shots into a plurality of intervals, the images defined at reference instants bordering an interval being called the reference images, and sequentially for each defined interval
    - segmenting at least one reference image to obtain a set of layers for at least said reference image,
    - initializing one mosaic associated with each of the layers of the reference images,
    sequentially, for each image in each defined interval,
    - forward and backward motion estimation between the current image and the reference images to establish a forward and a backward motion model for each layer of the current images,
    - energy determination as a sum of a color data term, a temporal constraints term and a spatial smoothness term,
    - segmentation of the current image by minimizing the said energy,

    **Characterized in that** the energy further comprises an image-to-mosaic motion data term, said term being based on a motion residual estimated between the current image and the mosaics associated with the reference images.

2.  Method according to claim 1 **characterized in that** the two reference images bordering an interval are segmented in order to obtain a set of layers for the said two reference images.

3. Method according to claim 1 or 2 **characterized in that** said mosaic of a given layer initially results from the accumulation of the layer data from the previously segmented reference images.

4. Method according to claim 1 or 2 **characterized in that** said mosaic of a given layer initially results from the segmentation of one previously segmented image.

5. Method according to claim 1 **characterized in that** it further comprises a step of projection of the segmented layers of the current image to the corresponding reference mosaics to update the reference mosaics.

6. Method according to one of the preceding claims **characterized in that** the energy minimization uses the graph cuts framework.

7. Method according to one the preceding claims **characterized in that** when all images in said interval have been segmented, it comprises a further step of user interaction to refine at least one of the obtained mosaics.

8. Method according to claim 7 **characterized in that** further to the user interaction, the following steps are repeated sequentially for each image in each defined interval with the updated mosaics,

   - forward and backward motion estimation between the current image and the reference images to establish a forward and a backward motion model for each layer of the current images,
   - energy determination as a function of color attributes, temporal constraints, spatial smoothness, an image-to-mosaic data term
   - segmentation of the current image by minimizing the said energy.

9. Method according to claim 1 **characterized in that** a user interaction modifies at least one mosaic manually during said sequential steps.


**Patentansprüche**

1. Verfahren zum Segmentieren von Videosegmenten, wobei das Verfahren die folgenden Schritte umfasst:

   - Bestimmen von Referenzzeitpunkten, die die Aufnahmen in mehrere Intervalle schneiden, wobei die Bilder, die bei den Referenzzeitpunkten definiert sind, die ein Intervall begrenzen, die Referenzbilder genannt werden, und
   aufeinanderfolgend für jedes definierte Intervall
   - Segmentieren mindestens eines Referenzbilds zum Erhalten einer Menge von Schichten mindestens für das Referenzbild,
   - Initialisieren eines jeder der Schichten der Referenzbilder zugeordneten Mosaiks,
   aufeinanderfolgend für jedes Bild in jedem definierten Intervall,
   - Vorwärts- und Rückwärtsbewegungsschätzung zwischen dem gegenwärtigen Bild und den Referenzbildern zum Festsetzen eines Vorwärts- und eines Rückwärtsbewegungsmodells für jede Schicht der gegenwärtigen Bilder,
   - Energiebestimmung als eine Summe eines Farbdatenterms, eines Terms zeitlicher Beschränkungen und eines Terms räumlicher Glattheit,
   - Segmentierung des gegenwärtigen Bilds durch Minimieren der Energie,

   **dadurch gekennzeichnet, dass** die Energie ferner einen Bild-zu-Mosaik-Bewegungsdatenterm umfasst, wobei der Term auf einem Bewegungsrestwert beruht, der zwischen dem gegenwärtigen Bild und den den Referenzbildern zugeordneten Mosaiken geschätzt wird.

2. Verfahren nach Anspruch 1, **dadurch gekennzeichnet, dass** die zwei Referenzbilder, die ein Intervall begrenzen, segmentiert werden, um eine Menge von Schichten für die zwei Referenzbilder zu erhalten.

3. Verfahren nach Anspruch 1 oder 2, **dadurch gekennzeichnet, dass** sich das Mosaik einer gegebenen Schicht anfangs aus der Ansammlung der Schichtdaten von den zuvor segmentierten Referenzbildern ergibt.

4. Verfahren nach Anspruch 1 oder 2, **dadurch gekennzeichnet, dass** sich das Mosaik einer gegebenen Schicht anfangs aus der Segmentierung eines zuvor segmentierten Bilds ergibt.

5. Verfahren nach Anspruch 1, **dadurch gekennzeichnet, dass** es ferner einen Schritt der Projektion der segmentierten Schichten des gegenwärtigen Bilds auf die entsprechenden Referenzmosaike umfasst, um die Referenzmosaike zu aktualisieren.

6. Verfahren nach einem der vorhergehenden Ansprüche, **dadurch gekennzeichnet, dass** die Energieminimierung das Graphenschnitte-Framework verwendet.

7. Verfahren nach einem der vorhergehenden Ansprüche, **dadurch gekennzeichnet, dass** es, wenn alle Bilder in dem Intervall segmentiert worden sind, einen weiteren Schritt der Nutzerwechselwirkung zum Verfeinern mindestens eines der erhaltenen Mosaike umfasst.

8. Verfahren nach Anspruch 7, **dadurch gekennzeichnet, dass** weiter zu der Nutzerwechselwirkung für jedes Bild in jedem definierten Intervall mit den aktualisierten Mosaiken die folgenden Schritte aufeinanderfolgend wiederholt werden:

   - Vorwärts- und Rückwärtsbewegungsschätzung zwischen dem gegenwärtigen Bild und den Referenzbildern zum Festsetzen eines Vorwärts- und eines Rückwärtsbewegungsmodells für jede Schicht der gegenwärtigen Bilder,
   - Energiebestimmung als Funktion von Farbattributen, zeitlichen Beschränkungen, räumlicher Glattheit, einem Bild-zu-Mosaik-Datenterm,
   - Segmentierung des gegenwärtigen Bilds durch Minimieren der Energie.

9. Verfahren nach Anspruch 1, **dadurch gekennzeichnet, dass** eine Nutzerwechselwirkung während der aufeinanderfolgenden Schritte mindestens ein Mosaik manuell ändert.

## Revendications

1. Procédé permettant la segmentation de segments vidéo comprenant les étapes suivantes :

   - détermination d'instants de référence, qui scindent les plans en une pluralité d'intervalles, les images définies aux instants de référence délimitant un intervalle étant appelées images de référence, et
   séquentiellement, pour chaque intervalle défini,
   - segmentation d'au moins une image de référence, pour obtenir un ensemble de couches pour au moins ladite image de référence,
   - initialisation d'une mosaïque associée à chacune des couches des images de référence,
   séquentiellement, pour chaque image dans chaque intervalle défini,
   - estimation de mouvement avant et arrière entre l'image courante et les images de référence pour établir un modèle de mouvement avant et arrière pour chaque couche des images courantes,
   - détermination d'énergie en tant que somme d'un terme de données couleur, d'un terme de contraintes temporelles et d'un terme de régularité spatiale,
   - segmentation de l'image courante en réduisant ladite énergie,

   **Caractérisé en ce que** l'énergie comprend en outre un terme de données de mouvement d'image à mosaïque, ledit terme étant basé sur un résidu de mouvement estimé entre l'image courante et les mosaïques associées aux images de référence.

2. Procédé selon la revendication 1, **caractérisé en ce que** les deux images de référence délimitant un intervalle sont segmentées pour obtenir un ensemble de couches pour lesdites deux images de référence.

3. Procédé selon la revendication 1 ou 2, **caractérisé en ce que** ladite mosaïque d'une couche donnée résulte initialement de l'accumulation des données de la couche à partir des images de référence précédemment segmentées.

4. Procédé selon la revendication 1 ou 2, **caractérisé en ce que** ladite mosaïque d'une couche donnée résulte initialement de la segmentation d'une image précédemment segmentée.

**5.** Procédé selon la revendication 1, **caractérisé en ce qu'**il comprend en outre une étape de projection des couches segmentées de l'image courante sur les mosaïques de référence correspondantes pour mettre à jour les mosaïques de référence.

**6.** Procédé selon l'une des revendications précédentes, **caractérisé en ce que** la réduction d'énergie utilise le cadre des « graph cuts ».

**7.** Procédé selon l'une des revendications précédentes, **caractérisé en ce qu'**il comprend, dès que toutes les images dudit intervalle ont été segmentées, une étape supplémentaire d'interaction utilisateur pour affiner au moins une des mosaïques obtenues.

**8.** Procédé selon la revendication 7, **caractérisé en ce qu'**outre l'interaction utilisateur, les étapes suivantes sont répétées séquentiellement pour chaque image dans chaque intervalle défini avec les mosaïques mises à jour :

- estimation de mouvement avant et arrière entre l'image courante et les images de référence pour établir un modèle de mouvement avant et arrière pour chaque couche des images courantes,
- détermination d'énergie en tant que fonction d'attributs couleur, de contraintes temporelles, de régularité spatiale, d'un terme de données d'image à mosaïque
- segmentation de l'image courante en réduisant ladite énergie.

**9.** Procédé selon la revendication 1, **caractérisé en ce qu'**une interaction utilisateur modifie au moins une mosaïque manuellement au cours desdites étapes séquentielles.

Fig 1

Fig 2

E'1 — Determination of reference instants

E'2 — Segmentation of the reference image

Layers of the reference image

E'3 — Mosaïc initialisation for the reference image

E'4 — t → t+1

backward motion estimation for the current image

Energy determination

E'7 — Segmentation by energy minimisation

Projection of the layers to update the reference mosaïcs

E'9 — $t < t_B$  yes / no

Fig 3

$t_A$   $t$   $t_B$

$I_t$

$MM_{A,0}$

$MM_{A,1}$

$Mos_{A,i}$

Fig 4

$t_A$   $t$   $t_B$

$I_t$

$MM_{B,0}$

$MM_{B,1}$

$Mos_{B,i}$

Fig 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JIANGJIAN XIAO et al.** *Layer-based video registration,* February 2005, ISSN 1432-1769
- **Bugeau A et al.** *Track and cut: simultaneous tracking and segmentation of multiple objects with graph cuts,* 22 January 2008

- **Kedar A Patwardhan et al.** *Video inpainting Under Constrained Camera motion,* 01 February 2007, ISSN 1057-7149
- **C. Rother ; V. Kolmogorov ; A. Blake.** GrabCut - Interactive Foreground Extraction Using Iterated Graph Cuts. *SIGGRAPH,* 2004